# NEUE EUROPÄISCHE PATENTSCHRIFT

(11) **EP 0 539 649 B2**
(45) Veröffentlichungstag und Bekanntmachung des Hinweises auf die Entscheidung über den Einspruch: **20.01.1999**
(45) Hinweis auf die Patenterteilung: 13.10.1993
(21) Anmeldenummer: 92105854.1
(22) Anmeldetag: 04.04.1992
(51) Int. Cl.: B65G 25/04

(54) **Transportvorrichtung für längliche Werkstücke**
Conveyor for elongated pieces
Convoyeur pour pièces allongées

(30) Priorität: 29.10.1991 DE 9113426 U
(43) Veröffentlichungstag der Anmeldung: 05.05.1993
(73) Patentinhaber: TIANI GmbH SONDERMASCHINEN VERTRIEB UND SERVICE, D-71273 Rutesheim (DE)
(72) Erfinder: Tiani, Franz, W-7255 Rutesheim (DE)
(74) Vertreter: Wolff, Michael, Dipl.-Phys.

(56) Entgegenhaltungen:
- DE-A- 2 004 484
- DE-U- 9 014 057
- DE-U- 9 113 426
- FR-A- 2 257 509
- US-A- 2 764 274

## Beschreibung

Die Erfindung betrifft die aus der DE-U-90 14 057 bekannte Transportvorrichtung für längliche Werkstücke. Im vorläufigen Ausführungsbeispiel jener Vorrichtung I sind an der Mittelleiste der Transportleiste zwei parallele, vertikal hochkant liegende Innenleisten zur Unterstützung der Werkstuck-Füße (kleine Pleuel-Augen) und zwei parallele, vertikal hochkant liegende Außenleisten befestigt, die zur seitlichen Führung der Werkstück-Füße die Innenleisten überragen, welche in kleinerem senkrechtem Abstand voneinander angeordnet sind als die Außenleisten. Nachteilig ist an diesem Aufbau der Transportleiste aus fünf Einzelleisten mit gegenseitigen starren Verbindungen, daß die Transportleiste, zumindest deren Außenleisten, bei einem Wechsel der Breite der Werkstück-Füße ausgetauscht werden muß.

Der Erfindung liegt daher die Aufgabe zugrunde, die bekannte Transportvorrichtung zu verbessern, indem unter Vermeidung ihres genannten Nachteiles eine Transportvorrichtung 11 geschaffen wird, deren Transportleiste weder ganz noch teilweise auswechselbar sein noch verstellbare Außenleisten aufweisen muß und dennoch verschieden breite Werkstück-Füße transportieren kann.

Diese Aufgabe ist erfindungsgemäß durch die Merkmale des Anspruchs 1 gelöst.

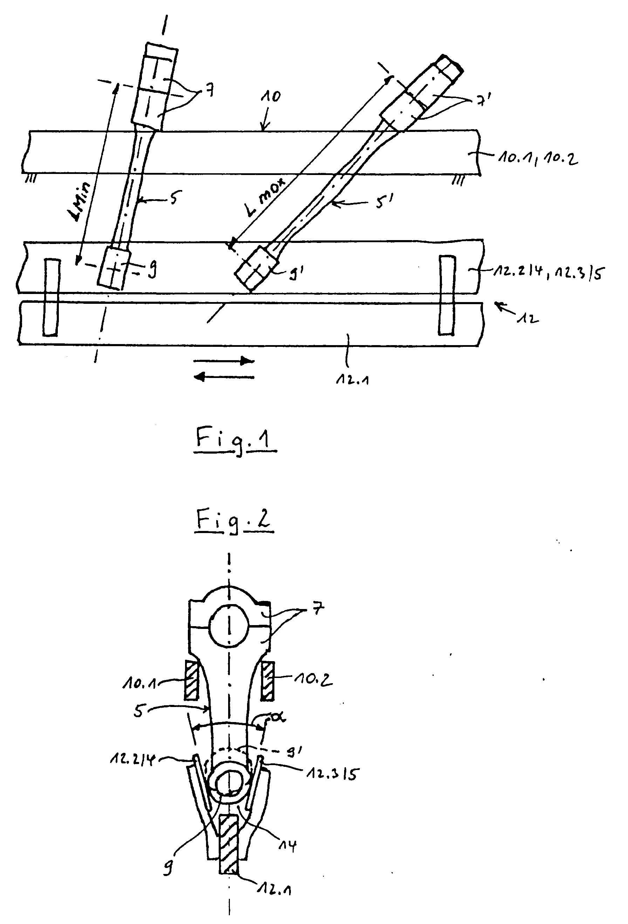

Eine dermaßen ausgestaltete Transportvorrichtung vermag verschiedene Serien von länglichen Werkstücken mit unterschiedlich breiten Füßen ohne weiteres zu transportieren, da der nach oben allmählich größer werdende Abstand der bei den seitlichen Leisten der Transportleiste voneinander die Aufnahme und Lagerung verschieden breiter Werkstück-Füße ermöglicht, allerdings in verschieden großer Höhenlage auf der Transportleiste. Hierbei handelt es sich aber im Vergleich zu dem genannten Vorteil nicht um einen echten Nachteil, weil seit der Schaffung der bekannten Transportvorrichtung I die Erkenntnis gewonnen wurde, daß bei konstantem senkrechtem Abstand der Trag- von der Transportleiste die Höhenlage des Werkstück-Fußes auf der Transportleiste die Schräglage des Werkstückes zwar beeinflußt,jedoch nicht kriich, solange ein maximaler spitzer Winkel der Neigung des Werkstückes gegen die Vertikale nicht überschritten wird. - Dieselbe Erkenntnis läßt die in der DE 90 14 057 U1 als Zusatz zu der dort offenbarten Transportvorrichtung I vorgeschlagene Einrichtung zum Einstellen der Höhenlage der Transportleiste auf verschieden lange Werkstücke, insbesondere Pleuel mit unterschiedlichem Augenabstand (Stichmaß), entbehrlich erscheinen, da Unterschiede bei der Werkstücklänge lediglich zu verschiedenen Schräglagen der Werkstücke führen, welche zwischen erheblich beabstandeten Winkelgrenzen variieren können, denen zwei Grenzwerte der Werkstücklänge entsprechen, als welche hier der in Längsrichtung des Werkstückes gemessene Abstand der Berührungspunkte des Werkstuck-Kopfes an der Tragleiste von den Berührungspunkten des Werkstück-Fußes an der Transportleiste zu gelten hat, wie Figur 2 veranschaulicht.

Der Erweiterungswinkel, unter dem die bei den seitlichen Leisten der Transportleiste zueinander stehen, beträgt vorzugsweise ungefähr 25°, mass aber zwischen 20°und 45° liegen.

Zur Führung einer ebenen Fräsfläche eines Unwucht-Ausgleichsgewichts am Werkstück-Fuß sollte an einer der beiden dann asymmetrisch angeordneten Transport-Leisten eine gegebenenfalls vertikale Führungsfläche vorhanden sein, deren Stützfunktion zumindest vernachlässigbar ist.

Im folgenden ist die Erfindung anhand einer durch die Zeichnung beispielhaft dargestellten Ausführungsform der erfindungsgemäßen Transportvorrichtung im einzelnen erläutert. Es zeigt schematisch:
- Figur 1: eine Seitenansicht
- Figur 2: einen vertikalen Querschnitt

Im Ausführungsbeispiel sollen im Abstand aufeinanderfolgende Pleuel 5 für Automobil-Motoren mit Hubkolben und Kurbelwelle in Figur 1 von links nach rechts transportiert werden, wobei die großen Pleuel-Augen 7 oben auf einer obenliegenden Tragleiste 10 und die kleinen Pleuel-Augen 9 unten auf einer untenliegenden Transportleiste 12 liegen, und zwar bei einer Schräglage jedes Pleuels 5 zwischen 10° und 45° gegen die Vertikale, z.B. 15° bzw. 45° für Pleuel mit minimalem bzw. maximalem Augenabstand L.

Die Tragleiste 10 ist stationär, gerade und hier waagrecht; sie besteht aus zwei das große Auge 7 unterstützenden, parallelen, hochkant liegenden Leisten 10.1 und 10. 2. Diese unterstützen die großen Augen 7 ständig, weil die Transportleiste 12 keine Steigung in Transportrichtung aufweist. Andernfalls würden die großen Augen 7 beim Vorschub der Transportleiste 12 von dieser ein wenig abheben.

Diese bewegbare, gerade und hier waagrechte Transportleiste 12 besteht hauptsächlich aus einer hochkant liegenden unteren Mittelleiste 12.1 und aus daran symmetrisch darüber befestigten zwei schräg hochkant liegenden seitlichen leisten 12.2/4 und 12.3/5 zur Unterstützung der kleinen Augen 9 sowie gleichzeitig zur seitlichen Führung der kleinen Augen 9, die, wie in Figur 2 angedeutet, unterschiedlich groß sein können, weil die Leisten 12.2/4 und 12.3/5 unter einem Erweiterungswinkel α von 25° nach oben divergieren und einen sich nach oben linear erweiternden Zwischenraum 14 bilden.

Der nicht gezeigte Antrieb der hier waagrecht oszillierenden Transportleiste 12 kann mittels Kurbeltrieb, Linearzylinder oder Schwingelementen erfolgen und bewirkt, daß die Werkstück-Füße (9) dank ihrer beim Leistenvorschub zunehmenden Haftreibung an der Transportleiste die Werkstück-Köpfe (7) auf der Tragleiste 10 rutschend nach vorn schieben, wobei die parallelen Schräglagen der Werkstücke (5) nicht geändert werden, und dank der beim Leistenrückzug zunehmenden Haftreibung an der Tragleiste auf dieser ortsfest liegen bleiben, das heißt, relativ zur Transportleiste nach vorn rücken.

## Patentansprüche

1. Transportvorrichtung für längliche Werkstücke (Pleuel 5) mit einem schwereren Kopf (großes Auge 7) und einem leichteren Fuß (kleines Auge 9), insbesondere Pleuel (5) mit großem (7) bzw. kleinem (9) Auge für Automobil-Motoren; mit einer stationären geraden, obenliegenden, gegebenenfalls waagrechten, Tragleiste (10), insbesondere aus zwei symmetrischen Hälften (Leisten 10.1 und 10.2), zur Unterstützung der schwereren Werkstück-Köpfe (große Augen 7) und mit einer bewegbaren geraden, untenliegenden, gegebenenfalls waagrechten, Transportleiste (12), insbesondere mit zwei symmetrischen Hälften (Leisten 12.2/4 und 12.3/5), zur Mitnahme der Werkstück-Füße (kleine Augen 9), die in Transportrichtung stets hinter den Werkstück-Köpfen (große Augen 7) zurückbleiben, wobei die Transportleiste (12) ausschließlich in ihrer Längsrichtung beweglich angeordnet und für eine hin- und hergehende translatorische Bewegung in ihrer Längsrichtung antreibbar ist, so daß die Werkstücke (Pleuel 5) intermittierend vorschiebbar sind; und wobei die Transportleiste (12) zur Unterstützung oder seitlichen Führung der Werkstück-Füße (kleine Augen 9) vorgesehen ist, wobei ein Paar Transport-Leisten (12.2/4 und 12.3/5) zur Unterstützung und zur seitlichen Führung der Werkstück-Füße (kleine Augen 9) vorgesehen ist, wobei die Führungsflächen dieser Leisten gegen die darüberliegende Tragleiste (10) divergierend einen sich nach oben, insbesondere linear erweiternden Zwischenraum (14) bilden, in den verschieden große Werkstück-Füße (kleine Augen 9) aufnehmbar sind, dadurch gekennzeichnet, daß der Winkel (α ) einer linearen Erweiterung des Zwischenraumes (14) zwischen 20° und 45°, insbesondere ungefähr 25°, beträgt.

2. Vorrichtung nach Anspruch 1, für Werkstücke, deren Fuß ein Unwucht-Ausgleichsgewicht mit ebener Fräsfläche aufweist, dadurch gekennzeichnet, daß jedes Paar Transport-Leisten bezüglich einer vertikalen Zwischenebene asymmetrisch angeordnet ist, von denen eine eine insbesondere vertikale ebene Führungsfläche aufweist.

## Claims

1. An apparatus for transporting elongate workpieces (connecting rod 5) which have a heavy head (big end 7) and a lighter base (little end 9), particularly connecting rods (5) with a big end (7) and little end (9) for motor car engines; with a stationary straight upper and possibly horizontal carrier bar (10), consisting in particular or two symmetrical halves (bars 10.1 and 10.2) for supporting the heavier workpiece heads (big ends 7) and with a movable straight lower possibly horizontal transporter bar (12), particularly with two symmetrical halves (bars 12.2/4 and 12.3/5) for entraining the workpiece bases (little ends 9) which, in the direction of transport, always remain behind the workpiece heads (big ends 7), the transport bar (12) only being movably disposed in its longitudinal direction and being adapted to be driven for a reciprocating translatory movement in the longitudinal direction so that the workpieces (connecting rods 5) can be advanced intermittently; and whereby the transport bar (12) is supplied to support or provide lateral guidance for the workpiece bases (little ends 9), whereby a pair of transport bars (12.2/4 and 12.3/5) are provided for supporting and laterally guiding the workpiece bases (little ends 9), whereby the guide surfaces of these bars diverge towards the carrier bar (10) which is above to form an upwardly particularly lineally widening intermediate space (14) in which workpiece bases (little ends 9) of various sizes can be accommodated, characterised in that the angle (α) of a linear widening of the intermediate space (14) is between 20° and 45° and is in particular approximately 25°.

2. An apparatus according to Claim 1, for workpieces whose base comprises an imbalance compensating weight having a plane milled surface, characterised in that each pair of transport bars are asymmetrically disposed in respect of a vertical intermediate plane, one of them having in particular a plane vertical guide surface.

## Revendications

1. Convoyeur pour pièces allongées (bielle 5) avec une tête lourde (gros oeil 7) et un pied plus léger (petit oeil 9), notamment bielle (5), avec un gros oeil (7) et un petit oeil (9) pour moteurs d'automobile ; avec un tasseau (10) fixe, droit, placé au-dessus, notamment en deux moitiés symétriques (tasseaux 10.1 et 10.2) pour soutenir les têtes de pièce lourdes (gros oeil 7) et avec une tasseau de transfert (12) mobile droit, en dessous, horizontal le cas échéant, notamment en deux moitiés symétriques (tasseaux 12.2/4 et 12.3/5) pour entraîner les pieds de pièces (petits yeux 9), qui restent toujours à la traîne derrière les têtes de pièces (gros yeux 7), les tasseaux de transfert (12) étant disposés mobiles exclusivement en sens longitudinal et peuvant être entraînés dans leur sens longitudinal dans un mouvement de translation en va-et-vient de sorte que les pièces (bielles 5) puissent être avancées de façon intermittente ; et on prévoit que les tasseaux de transfert (12) soutiennent les pieds des pièces (petits yeux 9), et à cela on prévoit une paire de tasseaux de transfert (12.2/4 et 12.3/5) pour soutenir et guider latéralement les pieds des pièces (petits yeux 9), les surfaces de guidage de ces tasseaux étant inclinées de façon divergente par rapport aux tasseaux support (10) placés au-dessus pour former un espace intermédiaire (14) s'élargissant notamment linéairement vers le haut, dans lequel on peut placer des pieds de pièce de différentes tailles (petits yeux 9), caractérisé en ce que l'angle ( α ) d'un élargissement linéaire de l'espace intermédiaire (14) est compris entre 20° et 45°, et vaut notamment environ 25°.

2. Convoyeur selon la revendication 1 pour des pièces dont le pied comporte une masse de compensation d'équilibrage avec une surface plane à fraiser, caractérisé en ce que chaque paire de tasseaux de transfert est disposée asymétriquement par rapport à un plan intermédiaire vertical, dont l'une présente une surface de guidage plane, notamment verticale.
